# EUROPÄISCHE PATENTSCHRIFT

(11) **EP 4 097 839 B1**
(45) Veröffentlichungstag und Bekanntmachung des Hinweises auf die Patenterteilung: **25.06.2025**
(21) Anmeldenummer: 21702905.7
(22) Anmeldetag: 27.01.2021
(51) Int. Cl.: H02P 21/05

(54) **VERFAHREN UND VORRICHTUNG ZUR DREHZAHLREGELUNG EINER ELEKTRISCHEN MASCHINE FÜR DEN ANTRIEB EINES KOMPRESSORS EINER WÄRMPEPUMPE**
METHOD AND DEVICE FOR CONTROLLING THE ROTATIONAL SPEED OF AN ELECTRIC MACHINE FOR THE DRIVE OF A COMPRESSOR OF A HEAT PUMP
PROCÉDÉ ET DISPOSITIF DE COMMANDE DE LA VITESSE DE ROTATION D'UNE MACHINE ÉLECTRIQUE POUR L'ENTRAÎNEMENT D'UN COMPRESSEUR D'UNE POMPE À CHALEUR

(30) Priorität: 31.01.2020 DE 102020201203
(43) Veröffentlichungstag der Anmeldung: 07.12.2022
(73) Patentinhaber: Robert Bosch GmbH, 70442 Stuttgart (DE)
(72) Erfinder: FASSNACHT, Jochen, 75365 Calw (DE); REIMANN, Sven, 71272 Renningen (DE); GAENZLE, David, 70771 Leinfelden-Echterdingen (DE); MANDERLA, Maximilian, 71638 Ludwigsburg (DE)
(86) Internationale Anmeldenummer: PCT/EP2021/051866
(87) Internationale Veröffentlichungsnummer: WO 2021/151948

(56) Entgegenhaltungen:
- EP-A2- 1 519 046
- DE-A1- 10 341 106
- DE-A1- 102018 115 114
- US-A1- 2012 306 411

## Beschreibung

Die Erfindung betrifft ein Verfahren und eine Vorrichtung zur Drehzahlregelung einer elektrischen Maschine für den Antrieb eines Kompressors, beispielsweise einer Wärmpepumpe. Ferner betrifft die Erfindung ein elektrisches Antriebssystem mit einer entsprechenden Vorrichtung und eine Wärmepumpe mit einem elektrischen Antriebssystem sowie ein Computerprogramm und ein computerlesbares Speichermedium.

### Stand der Technik

Die Druckschrift DE 10 2008 013 557 A1 offenbart ein Wäschebehandlungsgerät mit einer mittels einer elektrischen Maschine angetriebenen Trommel und einem Akustiksensor, wobei in Abhängigkeit eines gemessenen akustischen Signals die Drehzahl der Trommel reguliert wird.

Bei der Verwendung elektrischer Maschinen für den Antrieb von Wärmepumpen werden diese mit Kompressoren verbunden. Die Kompressoren erzeugen bevorzugt aufgrund ihrer nichtkontinuierlichen Arbeitsweise, also dem Arbeitsspiel bestehend aus Ansaugen, Verdichten und Ausstoßen unter Druck, sehr starke Vibrationen, da deren Kolbenmassen permanent beschleunigt und abgebremst werden. Dabei entstehen Vibrationen, Druckwellen und Körperschallwellen, die sich über das gesamte System aus Leitungen und Komponenten beispielsweise einer Wärmepumpe ausbreiten. Falls diese Wellen über eine Oberfläche z.B. eine Rohrleitung, einen Gehäusedeckel oder einen Wärmetauscher abgestrahlt werden, so ergeben sich deutlich hörbare Geräusche. Diese sind besonders laut, wenn eine Resonanzfrequenz beispielsweise des Leitungssystems oder eines Gehäuses angeregt wird. Einhergehend mit dieser Arbeitsweise ergeben sich deutliche Drehmomentschwankungen an der Kompressorantriebswelle über die der Rotor der elektrische Maschine den Kompressor antreibt und hierzu bevorzugt mit der Kompressorantriebswelle, bevorzugt drehfest, verbunden ist. Dabei entstehen je Umdrehung der Kompressorantriebswelle in Abhängigkeit der Bauform des Kompressors, bevorzugt in Abhängigkeit der Anzahl der verwendeten Zylinder, ein schwankendes Drehmoment mit einmalig oder mehrmalig sehr hohen Spitzendrehmomentlasten mit steilen Flanken entgegen der Drehrichtung und/ oder auch in der Drehrichtung der Kompressorantriebswelle oder des Rotors.

Die Leistung der Kompressoren oder der Luftdurchsatz durch einen Kompressor wird mittels Variation der Drehzahl geregelt. Eine Drehzahlregelung bei Inverterbetriebenen Kompressoren ist bekannt. Bevorzugt werden BLDC-Motoren oder Synchronmaschinen mit einer geberlosen Drehzahlregelung und einer ebenfalls geberlosen unterlagerten feldorientierten Stromregelung geregelt. Bei einer konstanten Drehzahlregelung liegen die oben beschriebenen Spitzendrehmomentlasten an der Kompressorantriebswelle oder dem Rotor an, welche Beschleunigungen, Vibrationen, Druckschwankungen und daraus resultierende Geräusche verursachen. Diese Drehmomentschwankungen verursachen auch in der elektrischen Antriebsschaltung zwischen Stromquelle und elektrischer Maschine Ausgleichsströme, welche sich in einer Schwankung der aus dem elektrischen Zwischenkreis entnommenen bzw. rückgespeisten elektrischen Leistung widerspiegeln. Diese Leistung muss entweder in den Zwischenkreiskondensatoren zwischengespeichert werden oder der Stromquelle oder dem Netz entnommen werden. Letzteres führt zu unerwünschten Netzrückwirkungen. Daher muss der Zwischenkreiskondensator in Abhängigkeit der durch die mit der elektrischen Maschine angetrieben Last und der dadurch verursachten Drehmomentschwankungen im Antriebssystem ausgelegt werden. Für größere Drehmomentschwankungen ist der Zwischenkreiskondensator mit größerer Kapazität auszulegen. Wenn zur Kompensation von Spitzendrehmomentlasten in Drehrichtung dem mechanischen System Leistung über die elektrische Maschine und den Wechselrichter entnommen wird indem die Maschine ein Bremsmoment stellt und diese später, wenn der Kompressor sehr stark bremsend wirkt, wieder durch Aufbringen eines erhöhten Antriebsmoments zugeführt wird, werden zusätzliche Verluste erzeugt aufgrund der mehrmaligen Wandlung von elektrischer Energie des Inverterzwischenkreises in mechanische Energie des rotierenden Systems und wieder zurück. Eine einfache Drehzahlregelung würde genau dies machen, d.h. wenn der Kompressor stark bremsend wirkt und somit die Drehzahl sinkt, wird diese, bevorzugt mit einer Verzögerung nachträglich, durch ein erhöhtes elektrisches Antriebsmoment kompensiert und falls der Kompressor "antreibend" wirkt, was die Drehzahl erhöht, so würde die Drehzahlregelung dies über das Einstellen eines Bremsmoments mit der elektrischen Maschine kompensieren.

Daher besteht Bedarf an Lösungen, die die Vibrationen des Kompressors und das damit verbundene Geräusch dämpfen, wobei gleichzeitig der Mittelwert der Kompressordrehzahl über eine klassische Drehzahlregelung auf dem gewünschten Wert gehalten wird. Damit werden auch die Leistungsschwankungen des Zwischenkreises und somit eventuelle Netzrückwirkungen und Zusatzverluste reduziert. Ferner wird auch die mechanische Belastung der einzelnen Komponenten des Antriebssystems reduziert. Die Druckschriften DE 103 41 106 A1, EP 1 519 046 A2 und US 2012/306411 A1 offenbaren Verfahren und Vorrichtungen zur Drehzahlregelung einer elektrischen Maschine für den Antrieb eines Kompressors.

Es ist bekannt elektrische Drehfeldmaschinen mittels der feldorientierten Regelung (FOR, engl.: Field Oriented Control (FOC))zu regeln. Diese Regelung ist im Wesentlichen ausgelegt auf die Regelung der Grundwelle des Stroms, wobei hierzu mittels der d/q Transformation die Grundwelle des Stroms in Gleichgrößen id, iq in dem mitrotierenden dq-Koordinatensystem transformiert wird. Die Gleichgrößen werden in dem Koordinatensystem geregelt und die ermittelten Stellgrößen du, uq anschließend zurücktransformiert in den Zeitbereich und als Grundwelle der Spannung zur Ansteuerung der elektrischen Maschine verwendet. Bevorzugt wird die feldorientierte Regelung dazu eingesetzt, einfach und vor allem sehr dynamisch das gewünschte Drehmoment einer elektrischen Maschine mit einer Leistungselektronik und einer Steuerung einzustellen. Um eine hohe Dynamik der Drehmomenteinstellung und eine technisch einfache Einstellung des gewünschten Drehmoments zu erreichen werden die Drehströme in ein meist mit dem Rotorfeld mitrotierendes senkrechtes Drehsystem transformiert. In diesem System wird mittels Variation des drehmomentbildenden Stromanteils (q), und bevorzugt durch Variation des flussbildenden Anteils (d), das Drehmoment eingestellt. Vereinfachend wird hierbei bevorzugt von einer Grundwellenmaschine ausgegangen. Bevorzugt wird diese unterlagerte Regelung neben einer direkten Regelung genutzt.

### Offenbarung der Erfindung

Es wird ein Verfahren zur Drehzahlregelung einer elektrischen Maschine für den Antrieb eines Kompressors, beispielsweise einer Wärmepumpe, mit einem Drehzahlregler und einer Dämpfungseinheit bereitgestellt. Das Verfahren umfasst die Schritte:
Ermitteln eines Solldrehmomentes in Abhängigkeit einer Differenz aus einer Solldrehzahl und einer Istdrehzahl der elektrischen Maschine mittels des Drehzahlreglers,
Ermitteln eines Dämpfungsdrehmomentes in Abhängigkeit eines Winkels und einem ersten Drehmomentwert,
Überlagern einer das Solldrehmoment charakterisierenden Größe mit einer das Dämpfungsdrehmoment charakterisierenden Größe zu einer das Ansteuerdrehmoment charakterisierenden Größe,
Ansteuern der elektrischen Maschine mit der das Ansteuerdrehmoment charakterisierenden Größe.

Bei dem Verfahren wird zunächst ein Solldrehmoment für die elektrische Maschine bestimmt in Abhängigkeit eines Vergleichs einer vorgebbaren Solldrehzahl und der Istdrehzahl. Die Solldrehzahl wird bevorzugt in Abhängigkeit einer abzugebenden Leistung, bevorzugt einer abzugebenden Kompressorleistung des mit der elektrischen Maschine anzutreibenden Kompressors vorgegeben. Die Istdrehzahl ist bevorzugt eine mittels einer Sensoreinrichtung erfassten Drehzahl, bevorzugt des Rotors der elektrischen Maschine oder der Kompressorantriebwelle. Die Istdrehzahl ist alternativ eine die Istdrehzahl charakterisierende Größe, die mit der Istdrehzahl korreliert. Oder die Istdrehzahl wird sensorlos aus physikalischen Parametern des Antriebssystems ermittelt, bevorzugt aus gemessenen Phasenspannungen oder den Phasenströmen der elektrischen Maschine oder mittels eines physikalisch mathematischen Modells zumindest der elektrischen Maschine. In Abhängigkeit der Differenz wird mittels eines vorbestimmten Kennfeldes oder eines vorbestimmten funktionalen Zusammenhangs ein Solldrehmoment ermittelt. Bevorzugt wird dieses Solldrehmoment oder die zu dessen Bildung verwendeten Größen - beispielsweise der Drehzahlsollwert oder Istwert stark gefiltert bzw. dessen Mittelwert über mindestens einen Durchgang der Maschinen- oder Kompressordrehunförmigkeit gebildet, um ein Dämpfungsdrehmoment zu ermitteln. Zur Vermeidung der oben erwähnten Drehmomentschwankungen wird ein Dämpfungsdrehmoment ermittelt. Da die Drehmomentschwankungen aufgrund der mechanischen Konstruktion einer an die elektrische Maschine angekoppelten Last auftreten, wird die Höhe des vorzugebenden Dämpfungsdrehmomentes in Abhängigkeit eines Winkels ermittelt. Bevorzugt ist dieser Winkel eine mit dem Rotorwinkel der elektrischen Maschine korrelierende Größe. Bevorzugt ist der Winkel der Rotorwinkel der elektrischen Maschine oder der Kompressorantriebswelle. Bei starr verbundenem Rotor der elektrischen Maschine und Kompressorantriebswelle sind die Werte des Winkels identisch. Falls ein Getriebe zwischen der elektrischen Maschine und dem Kompressor angeordnet ist oder die Kompressorantriebswelle innerhalb des Kompressors über ein Getriebe an die Kolben des Kompressors angebunden ist, ist als Winkel eine mit dem Rotorwinkel der elektrischen Maschine korrelierende Größe zu berücksichtigen, die ein gesamtes Lastspiel des Kompressors berücksichtigt. So werden die periodisch auftretenden Drehmomentschankungen, die des Arbeitsspiel eines Kompressors bestehend aus Ansaugen, Verdichten und Ausstoßen unter Druck vollständig berücksichtigt. Darüberhinaus wird zur Bestimmung des Dämpfungsdrehmomentes auch ein erster Drehmomentwert berücksichtigt, da mit steigender Leistung auch die Höhe des vorzugebenden Dämpfungsdrehmomentes steigt. Die Ermittlung des vorzugebenden Dämpfungsdrehmomentes erfolgt mittels einem vorbestimmten Kennfeld oder mittels einer mathematischen Funktion.

Bevorzugt wird ein dem Dämpfungsdrehmoment entsprechender Dämpfungsspannungwert, welcher ebenfalls anhand des Winkels und des ersten Drehmomentwertes, meist des mittleren Drehmomentssollwerts der Drehzahlregelung, zur Dämpfung nach einer feldorientierten Regelung aufgeschaltet. Bevorzugt wird ein Dämpfungsdrehmomentwert auf ein Eingangssollmoment einer feldorientierten Regelung addiert.

Eine das Ansteuerdrehmoment charakterisierende Größe ergibt sich aus der Überlagerung einer das Solldrehmoment charakterisierenden Größe mit einer das Dämpfungsdrehmoment charakterisierenden Größe. Die Überlagerung ist dabei bevorzugt eine Addition oder eine Multiplikation der beiden Größen. Mit der resultierenden das Ansteuerdrehmoment charakterisierenden Größe wird die elektrische Maschine angesteuert. Die Ansteuerung erfolgt bevorzugt mittels eines Inverters, welcher die das Ansteuerdrehmoment charakterisierenden Größe in eine Phasenspannung umwandelt, welche an die Wicklungen oder Phasen einer elektrischen Maschine angelegt werden.

Vorteilhaft wird eine Drehzahlregelung bereitgestellt, die bauartbedingte Drehmomentschwankungen angetriebener Lasten oder eines Antriebssystems beeinflusst oder reduziert. Bevorzugt hält der Drehzahlregler den Mittelwert der Drehzahl konstant und gibt das mittlere Drehmoment über mindestens einen Durchgang der Lastdrehunförmigkeit als Sollwert der unterlagerten feldorientierten oder gegebenenfalls direkten Strom bzw. Drehmomentregelung vor. Somit wird die Leistung des Kompressor richtig eingestellt. Mittels der zusätzlichen Ermittlung eines Dämpfungsdrehmomentes wird eine Geräuschdämpfung erreicht.

In einer anderen Ausgestaltung der Erfindung wird das Dämpfungsdrehmoment in Abhängigkeit einer harmonischen Funktion mit einer vorbestimmten Frequenz einer vorgebbaren Ordnung der Drehzahl der elektrischen Maschine ermittelt.

Das Dämpfungsdrehmoment wird in Abhängigkeit einer harmonischen Funktion mit einer vorbestimmten Frequenz einer vorgebbaren Ordnung der Drehzahl, der elektrischen Frequenz der elektrischen Maschine oder der Drehzahl der Kompressorantriebwelle des mit der elektrischen Maschine anzutreibenden Kompressors vorgegeben. Bevorzugt wird das Dämpfungsdrehmoments in Abhängigkeit des Lastwinkels, bevorzugt bei fester Kopplung anhand des Rotorwinkels der elektrischen Maschine, vorgegeben. Somit wird bevorzugt die Ordnung und die Drehzahl als auch die Orientierung über dem Winkel richtig berücksichtigt. Als Kompressor werden bevorzugt Kolbenverdichter, bevorzugt Hubkolbenverdichter, verwendet. In Abhängigkeit der Anzahl der Hubkolben eines Kompressors ergeben sich die signifikanten ungleichmäßigen Widerstände über eine Umdrehung der Kompressorantriebswelle. Die vorbestimmte Frequenz ist daher bevorzugt eine n-te Ordnung einer Grundfrequenz des Rotorwinkels oder der mechanischen Frequenz der elektrischen Maschine oder der Kompressorantriebswelle oder des Arbeitsspiels des Kompressors, welche einen signifikanten Beitrag für die mechanischen Schwingungen der elektrischen Maschine, des anzuschließenden Kompressors und/oder des Antriebssystems liefert. Bevorzugt sind dies die 1-te, 2, 3, 4, und/oder 6. Ordnung. Bevorzugt werden mehrere insbesondere mehr als eine oder mehr als zwei harmonische Ordnungen des Kompressors gleichzeitig berücksichtigt. Bevorzugt wird Anzahl der zu berücksichtigenden Ordnungen in Abhängigkeit der Konstruktion des Kompressors vorgegeben. Dabei steigt der Rechenaufwand nur maximal linear mit der Anzahl der Ordnungen.

Bei einer Bestimmung der n-ten Ordnung in Abhängigkeit des Winkels sind vorteilhaft beliebige Ordnungen in einer Tabelle abzubilden. Falls die Auswirkungen der Drehunförmigkeiten mit verschiedener Ordnung gleichmässig mit dem Drehmoment zunehmen, so ist unabhängig von der Ordnung eine zweidimensionale Tabelle über dem mittleren Drehmoment bzw. dem von der Drehzahlregelung vorgebenen Drehmoment und dem Winkel ausreichend. Falls sich die Geräusche bzw. Körperschallwellen mit verschiedenen Ordnungen unterschiedlich stark mit dem Drehmoment ändern, so müssen für jede Art der Drehmomentabhängigkeit eine Tabelle abgelegt werden.

Die Lage der aufzuaddierenden Signale in Relation zum Winkel ergibt sich aus der Konstruktion des Kompressors. Zu beachten ist, dass der Kompressorrotor immer in der gleichen Position zum E-Maschinenrotor in der Produktion montiert wird, was über Poka-Yoke einfach realisiert werden kann. Falls ein Getriebe zwischen E-Maschine und Kompressor verbaut wird, so ist die Übersetzung bzw. die Lage von Getriebeeingangs- und Ausgangswelle bei den Tabellen zu berücksichtigen. Auch hier muss die Lage von Eingangs- zu Ausgangswelle bekannt sein. Somit kann mit der Lageerfassung der elektrischen Maschine oder einer geberfreien Rotorpositionsermittlung der Lagewinkel der Dämpfungstabelle bestimmt werden. Falls eine Funktion zur Bestimmung der Dämpfungsignale oder eine Kombination aus Tabelle und Funktion verwendet werden, so gilt dies in gleicher Weise.

Falls die Position der Rotorwelle zur Kompressorwelle nicht exakt bekannt ist, z.b. weil man in der Produktion kein Poka-Yoka anwendet, so kann bei einer Erstinbetriebnahme des fertigen Produkt der Winkel anhand der entstehenden Geräusche kompensiert werden, indem ein Offset so lange addiert wird, bis die Geräusche bzw. Körperschallwellen minimal werden.

Vorteilhaft wird ein additives periodisches Dämpfungsdrehmoment zur Überlagerung mit dem Solldrehmoment des Drehzahlreglers bereitgestellt zur Beeinflussung der Vibrationen und der Geräuschentwicklung des Antriebssystems mit einer elektischer Maschine und einem mechanisch gekoppelten Kompressor.

In einer anderen Ausgestaltung der Erfindung wird die harmonische Funktion als eine Sinus- oder Cosinus-Funktion, eine Rechteckfunktion vorgegeben oder als eine beliebige Funktion oder mittels eines Kennfeldes vorgegeben, wobei die beliebige Funktion oder die Parameter des Kennfeldes in Abhängigkeit ungleichmäßiger Antriebsystemwiderstände vorgegeben werden.

Die harmonische Funktion wird bevorzugt als Sinus- oder Cosinusfunktion vorgegeben oder als Rechteckfunktion. Alternativ ist auch eine beliebige, beispielsweise analytisch oder anhand der Kompressorkonstruktion bestimmte, Funktion vorgebbar. Oder mittels eines vorbestimmten Kennfeldes wird eine harmonische Funktion vorgegeben. Die analytisch bestimmte Funktion oder das vorbestimmte Kennfeld sind hierzu bevorzugt in Abhängigkeit der ungleichmäßigen Antriebsystemwiderstände ermittelt oder vorgegeben worden. Die ungleichmäßigen Antriebssystemwiderstände umfassen die ungleichmäßigen Widerstände sowohl des anzuschließenden Kompressors über eine Umdrehung der Kompressorantriebswelle, der elektrischen Maschine über eine Umdrehung des Rotors und/ oder weitere ungleichmäßige Widerstände der Kopplung des Rotors der elektrischen Maschine mit der Kompressorantriebswelle des anzuschließenden Kompressors über eine Umdrehung der Kompressorantriebswelle. Bevorzugt ist der Rotor der elektrischen Maschine mit der Kompressorantriebswelle verbunden. Die Verbindung kann drehfest, trennbar oder mittels beispielsweise eines Zweimassenschwungrad gedämpft sein. Bevorzugt ist eine drehfeste Verbindung oder ein Übersetzungs- oder Untersetzungs-Getriebe zwischen dem Rotor und der Kompressorantriebswelle angeordnet. Sodann unterscheidet sich die Drehzahl des Rotors von der Drehzahl der Kompressorantriebswelle. Die ungleichmäßigen Widerstände werden in Abhängigkeit der sich langsamer drehenden Welle berücksichtigt.

Vorteilhaft wird ein Verfahren zur Bereitstellung eines additiven periodischen Dämpfungsdrehmomentes zur Überlagerung mit dem Solldrehmoment des Drehzahlreglers bereitgestellt.

Erfindungsgemäß wird die Amplitude des Dämpfungsdrehmomentes in Abhängigkeit einer das Solldrehmoment charakterisierenden Größe vorgegeben.

Die Amplitude und damit die Stärke des zu überlagernden Drehmomentes wird in Abhängigkeit einer das Solldrehmoment charakterisierenden Größe vorgegeben. Eine das Solldrehmoment charakterisierende Größe korreliert mit dem Solldrehmoment, welches mittels des Drehzahlreglers ermittelt wird. Mit steigendem Solldrehmoment wird ein größeres zu überlagerndes Dämpfungsdrehmoment zur Beeinflussung der Vibration und des Geräusch des Antriebssystems vorgegeben.

Vorteilhaft wird ein Verfahren zur Vorgabe einer Amplitude eines additiven periodischen Dämpfungsdrehmomentes zur Überlagerung mit dem Solldrehmoment des Drehzahlreglers bereitgestellt.

In einer Ausgestaltung der Erfindung ist die das Solldrehmoment charakterisierende Größe das ermittelte Solldrehmoment und die das Dämpfungsdrehmoment charakterisierende Größe das ermittelte Dämpfungsdrehmoment die Überlagerung des Solldrehmomentes und des Dämpfungdrehmomentes zu dem Ansteuerdrehmoment die das Ansteuerdrehmoment charakterisierende Größe.

Das ermittelte Solldrehmoment und das ermittelte Dämpfungsdrehmoment werden überlagert zu dem Ansteuerdrehmoment zur Ansteuerung der Maschine.

Vorteilhaft werden die ermittelten Größen direkt zur Ansteuerung der elektrischen Maschine verwendet.

In einer anderen Ausgestaltung der Erfindung wird die das Solldrehmoment charakterisierende Größe mittels einer feldorientierten Regelung als eine Sollspannung ermittelt wird und die das Dämpfungsdrehmoment charakterisierende Größe mittels einer feldorientierten Regelung und/ oder eines Maschinenmodells als eine Dämpfungsspannung ermittelt und die Sollspannung und die Dämpfungsspannung werden zu einer Ansteuerspannung überlagert, welche als die das Ansteuerdrehmoment charakterisierenden Größe ermittelt wird.

Mittels einer feldorientierten Regelung wird, bevorzugt aus dem mittels des Drehzahlreglers ermittelten Solldrehmoment, eine Sollspannung ermittelt. Diese Sollspannung wird in Abhängigkeit des Solldrehmomentes ermittelt und charakterisiert folglich das Solldrehmmoment. Entsprechend wird mittels einer feldorientierten Regelung und/ oder eines Maschinenmodells in Abhängigkeit des ermittelten Dämpfungsdrehmomentes eine Dämpfungsspannung ermittelt, welche das Dämpfungsdrehmoment charakterisiert. Die Ansteuerspannung wird als Überlagerung der Sollspannung und der Dämpfungsspannung vorgegeben, welche aufgrund ihrer Abhängigkeiten das Ansteuerdrehmoment charakterisiert.

Zur Regelung elektrischer Maschinen, bevorzugt permanentmagnetisch erregte Synchronmaschinen, werden verbreitet feldorientierte Regelungen verwendet. Dabei werden die Wechselgrößen der im Zeitbereich, bevorzugt sinusförmigen, einzuregelnden Phasenströme, auch die Grundwellen genannt, mittels einer mathematischen Transformation jeweils in ein mit der Frequenz der Wechselgrößen rotierendes Koordinatensystem übertragen. Die Frequenz der Wechselgrößen bestimmt auch die Frequenz des magnetischen Feldes in der Maschine, sodass dieses mit der Frequenz der Wechselgrößen rotierende Koordinatensystem auch feldorientiertes System genannt wird. Im stationären Betrieb der elektrischen Maschine ergeben sich aus den Wechselgrößen im Zeitbereich Gleichgrößen im feldorientierten System, welche mittels der üblichen Verfahren der Regelungstechnik geregelt werden können. Das feldorientierte System wird auch d/q-Koordinatensystem genannt. Dabei zeigt dessen d-Achse in Richtung des Rotorflusses. Die q-Achse ist senkrecht zu der d-Achse. Ein sinusförmiger Phasenstrom wird als Statorstromzeiger oder Statorstromvektor repräsentiert, welcher über seine Länge und seine Richtung charakterisiert wird.

Dieser Stromzeiger dreht sich synchron mit dem rotierenden Stator- oder Rotorfluss der elektrischen Maschine. In dem d/q Koordinatensystem kann der Stromzeiger entsprechend seiner Länge und seiner Richtung mittels zwei senkrecht aufeinander stehenden Komponenten Id und Iq dargestellt werden, welche im stationären Fall Gleichgrößen sind. Alternativ oder zusätzlich zur feldorientierten Regelung können auch sogenannte direkte Drehmomentregelverfahren eingesetzt werden. Bei diesen werden die Inverteransteuersignale nicht über eine feldorientierte Regelung und eine Modulation, sondern direkt modellbasiert berechnet und an den Inverter ausgegeben. Bei Verwendung einer derartigen Regelung muss das Dämpfungsdrehmoment vor der direkten Maschinenregelung auf den Drehmomentsollwert addiert werden.

Vorteilhaft werden die ermittelten Größen mittels einer feldorientierten Regelung oder einem direktem Drehmomentregelverfahren zur Ansteuerung der elektrischen Maschine verwendet.

Erfindungsgemäß entspricht der erste Drehmomentwert dem ermittelten Solldrehmoment oder dem Drehmomentwert einer feldorientierten Regelung.

Je nach Ausführungsbeispiel wird der ermittelte Drehmomentwert oder ein Drehmomentwert einer feldorientierten Regelung als erster Drehmoment verwendet.

Bevorzugt verursacht die Dämpfungskompensation eine Abweichung des Drehzahlistwerts vom Drehzahlsollwert und wirkt somit für den Drehzahlregler als Störung. Bei starker Filterung der Drehzahlregelung reagiert diese nicht mehr auf die Drehzahlschwankung innerhalb eines Lastspiels. In diesem Fall reagiert der Drehzahlregler nur noch sehr langsam auf eine Drehzahländerung, die z.B. aufgrund einer steigenden mittleren Last. Die Dynamik der Drehzahlregelung ist gering. Bevorzugt wird daher der Einfluss der Welligkeitskompensation und der welligen Last innerhalb eines Kompressorspiels auf die Istdrehzahl der Maschine mit einem Modell nachgebildet werden, um eine Filterung zu vermeiden.Hierzu wird dieser Modellwert vom ermittelten Istwert der Drehzahl vor dem Zuführen zu der Drehzahlregelung subtrahiert. Bei korrektem Modell wird kein Drehzahlfilter benötigt, da die Drehzahlwelligkeit zur Dämpfung für den Drehzahlregler ausgeblendet wird.

Vorteilhaft werden Varianten zur Bestimmung des ersten Drehmomentwertes bereitgestellt zur Ermittlung der Amplitude des Dämpfungsdrehmomentes.

In einer anderen Ausgestaltung der Erfindung wird der Einfluss des Dämpfungsdrehmomentes auf die Istdrehzahl mit einem Modell des mechanischen Systems ermittelt und von der Istdrehzahl subtrahiert.

Mittels einer Ermittlung des Einflusses des Dämpfungsdrehmomentes auf die Istdrehzahl mit einem Modell des mechanischen Systems und einer entsprechenden Brücksichtigung bei der Ermittlung des Solldrehmomentes werden die beiden Stufen der Drehzahlregelung, nämlich die Ermittlung eines Solldrehmomentes und die Ermittlung des Dämpfungsdrehmomentes, entkoppelt.

Vorteilhaft wird ein Verfahren zur Entkoppelung der beiden Stufen der Drehzahlregelungen bereitgestellt.

Ferner betrifft die Erfindung ein Computerprogramm, welches Befehle umfasst, die bei der Ausführung durch einen Computer diesen veranlassen, die Schritte des bisher beschriebenen Verfahrens auszuführen.

Ferner betrifft die Erfindung ein computerlesbares Speichermedium, umfassend Befehle, die bei der Ausführung durch einen Computer diesen veranlassen, die Schritte des bisher beschriebenen Verfahrens auszuführen.

Ferner betrifft die Erfindung eine Vorrichtung zur Drehzahlregelung einer elektrischen Maschine für den Antrieb eines Kompressors, wobei die Vorrichtung einen Drehzahlregler und eine Dämpfungseinheit umfasst. Die Vorrichtung ist dazu eingerichtet, die Schritte des beschriebenen Verfahrens auszuführen.

Vorteilhaft wird eine Vorrichtung für eine effektive Drehzahlregelung bereitgestellt, die bauartbedingte Drehmomentschwankungen angetriebener Lasten oder eines Antriebssystems beeinflusst oder reduziert.

Ferner betrifft die Erfindung ein elektrisches Antriebssystem mit einer elektrischen Maschine und einer beschriebenen Vorrichtung. Ein derartiges elektrisches Antriebssystem dient beispielsweise dem Antrieb eines Kompressors einer Wärmepumpe. Mittels des Verfahrens und der Vorrichtung wird ein optimierter Betrieb hinsichtlich mechanischer Belastung und/oder Geräuschentwicklung des Antriebsystems ermöglicht.

Ferner betrifft die Erfindung eine Wärmepumpe, mit einem beschriebenen elektrischen Antriebssystem, wobei die Wärmepumpe einen Kompressor und insbesondere einen Kondensator, eine Drossel und/ oder einen Verdampfer umfasst. Vorteilhaft wird somit eine Wärmepumpe bereitgestellt, welche eine Vorrichtung umfasst, mit der eine elektrische Maschine effektiv geregelt wird.

Es versteht sich, dass die Merkmale, Eigenschaften und Vorteile des erfindungsgemäßen Verfahrens entsprechend auf die Vorrichtung bzw. das elektrische Antriebssystem und die Wärmepumpe und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Struktur zur Ermittlung eines Dämpfungsdrehmoments
Figur 2
   eine schematische Drehzahlregelstruktur einer elektrischen Maschine
Figur 3
   eine erste alternative schematische Drehzahlregelstruktur einer elektrischen Maschine
Figur 4
   eine zweite alternative schematische Drehzahlregelstruktur einer elektrischen Maschine
Figur 5
   eine dritte alternative schematische Drehzahlregelstruktur einer elektrischen Maschine
Figur 6
   ein schematisch dargestelltes Ablaufdiagramm für ein Verfahren zur Drehzahlregelung einer elektrischen Maschine.
Figur 7
   eine schematische dargestellte Vorrichtung zur Drehzahlregelung einer elektrischen Maschine
Figur 8
   eine schematisch dargestellte Wärmepumpe mit einem elektrischen Antriebssystem

### Ausführungsformen der Erfindung

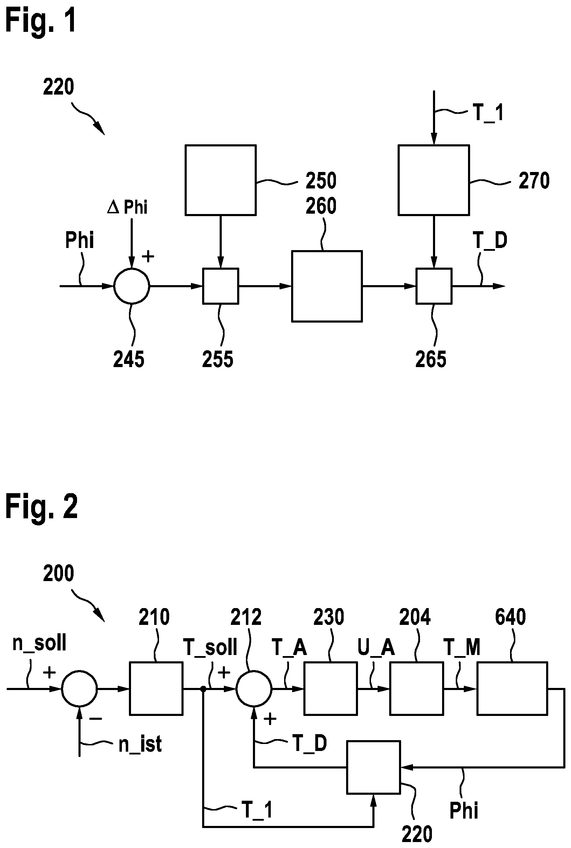

Die Figur 1 zeigt eine schematische Struktur oder Dämpfungseinheit 220 zur Ermittlung eines Dämpfungsdrehmoments T_D. In Abhängigkeit 245 des Winkels Phi und einer zu berücksichtigen Offsetposition ΔPhi oder Phasenverschiebung wird ein Wert 255 einer harmonischen Funktion mit einer vorbestimmten Frequenz einer vorgebbaren Ordnung 250 der Drehzahl der elektrischen Maschine oder der Drehzahl der Kompressorantriebwelle des mit der elektrischen Maschine anzutreibenden Kompressors beispielsweise als Sinusfunktion 260 bereitgestellt. In Abhängigkeit eines ersten Drehmomentwertes T_1 wird ein Faktor zur Beeinflussung der Amplitude 270 ermittelt, mit welchem die Sinusfunktion 260 multipliziert 265 wird. Das Ergebnis der Multiplikation ist das Ansteuerdrehmoment T_D, in Abhängigkeit dessen die elektrische Maschine 204 angesteuert wird. Bevorzugt wird zur Dämpfung verschiedener mehrerer vorgebbarer Ordnungen entsprechend mehrere harmonischen Funktion mit einer vorbestimmten Frequenz einer vorgebbaren Ordnung 250 der Drehzahl der elektrischen Maschine oder der Drehzahl der Kompressorantriebwelle des mit der elektrischen Maschine anzutreibenden Kompressors berücksichtigt.

Die Figur 2 zeigt eine schematische Drehzahlregelstruktur 200 einer elektrischen Maschine 204 für den Antrieb eines Kompressors 640. In Abhängigkeit des Winkels Phi und einem ersten Drehmomentwert T_1 wird in einer Dämpfungseinheit 220 ein Dämpfungsdrehmoment T_D ermittelt. Ein Solldrehmoment T_soll wird in Abhängigkeit einer Differenz aus einer Solldrehzahl n_soll und einer Istdrehzahl n_ist der elektrischen Maschine 204 mittels eines Drehzahlreglers 210 ermittelt. In einem ersten Überlagerungspunkt 212 wird eine das Solldrehmoment T_soll charakterisierende Größe mit einer das Dämpfungsdrehmoment T_D charakterisierenden Größe zu einer das Ansteuerdrehmoment T_A charakterisierenden Größe überlagert. Mittels einer feldorientierten Regelung 230 wird aus der das Ansteuerdrehmoment T_A charakterisierenden Größe eine Ansteuerspannung U_A ermittelt, mit welcher die elektrische Maschine 204 angesteuert wird. Die elektrische Maschine 204 treibt beispielhaft einen Kompressor 640 über die Kompressorantriebswelle an, wobei das Drehmoment T_M von dem Rotor der elektrischen Maschine 204 auf die Kompressorantriebswelle übertragen wird.

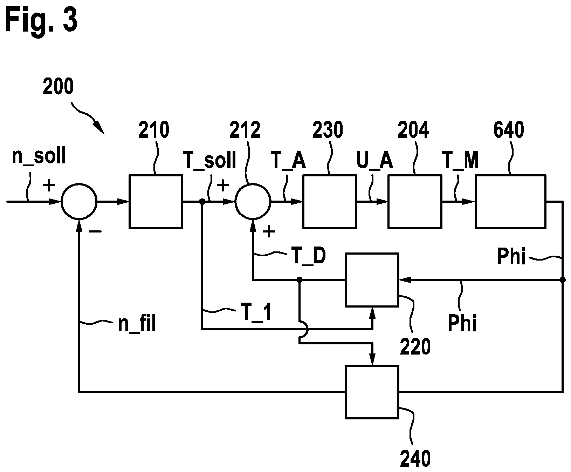

Die Figur 3 zeigt ausgehend von Figur 2 eine erste alternative schematische Drehzahlregelstruktur 200 einer elektrischen Maschine wobei ergänzend zu Figur 2 der Drehzahlregler 210 von der Dämpfungseinheit 220 entkoppelt wird über eine Entkoppelstruktur 240. Die Entkopplungsstruktur 240 ermittelt in Abhängigkeit des Winkels Phi und des Dämpfungsdrehmoment T_D eine gefilterte Drehzahl n_fil als Rückführgröße. Das Solldrehmoment T_soll wird in Abhängigkeit der Differenz aus der Solldrehzahl n_soll und der gefilterten Drehzahl n_fil der elektrischen Maschine 204 mittels des Drehzahlreglers 210 ermittelt. Bevorzugt erfolgt die Filterung des Istwertes der Drehzahl, welcher bevorzugt in Abhängigkeit des Winkels Phi ermittelt wird, über einen Tiefpass. Dieser filtert bevorzugt über mindestens ein mechanisches Lastspiel . Bevorzugt ist er für die niedrigste Drehzahl ausgelegt oder wird mit der Drehzahl nachgeführt. Alternativ erfolgt die Filterung mittels der Entkopplungsstruktur 240 mittels eines Modells der mittels der elektrischen Maschine 204 angetriebenen Last 640, bevorzugt mittels eines Modells des mechanischen Systems bestehend aus einem Kompressor, einem optionalen Getriebe zwischen E-Maschine und Kompressor und/ oder dem Maschinenrotor, mit dem die Auswirkung der Schwingungsdämpfung auf die Istdrehzahl modelliert werden und von der die aus dem Winkel Phi ermittelte Drehzahl abgezogen wird.

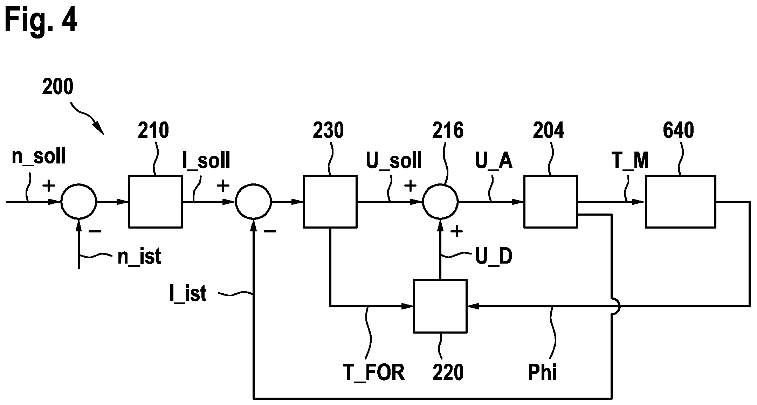

Figur 4 zeigt eine zweite alternative schematische Drehzahlregelstruktur 200 einer elektrischen Maschine 204 für den Antrieb eines Kompressors 640. In Abhängigkeit des Winkels Phi und eines ersten Drehmomentwertes T_1, bevorzugt der feldorientierten Regelung T_FOR, bevorzugt eines geschätzten oder modellierten Drehmomentwertes der feldorientierten Regelung T_FOR, wird in einer Dämpfungseinheit 220 Dämpfungsdrehmomentes T_D, bevorzugt eine Dämpfungsspannung U_D einer feldorientierten Regelung 230, ermittelt. Ein Solldrehmoment T_soll wird in Abhängigkeit einer Differenz aus einer Solldrehzahl n_soll und einer Istdrehzahl n_ist der elektrischen Maschine 204 mittels eines Drehzahlreglers 210 ermittelt. Mittels der feldorientierten Regelung 230 wird aus einem Sollstrom I_soll, welcher mit dem Solldrehmoment T_soll korelliert, eine Sollspannung U_soll ermittelt, bevorzugt aus dem Dämpfungsdrehmoment T_D eine Dämpfungsspannung U_D. Das Überlagern einer das Solldrehmoment T_soll charakterisierenden Größe mit einer das Dämpfungsdrehmoment T_D charakterisierenden Größe zu einer das Ansteuerdrehmoment T_A charakterisierenden Größe erfolgt mittels der Überlagerung des Sollspannug U_soll mit der Dämpfungsspannung U_D in dem zweiten Überlagerungspunkt 216 zu der Ansteuerspannung U_A. Mit der Ansteuerspannung U_A wird die elektrische Maschine 204 angesteuert. Die elektrische Maschine 204 treibt beispielhaft einen Kompressor 640 über die Kompressorantriebswelle an, wobei das Drehmoment T_M von dem Rotor der elektrischen Maschine 204 auf die Kompressorantriebswelle übertragen wird. Alternativ zu einer gemessenen oder geschätzten Drehzahl n_ist der elektrischen Maschine 204 könnte auch der Drehzahlsollwert n_soll zur Geräuschdämpfung eingesetzt werden, falls die Drehzahlregelung 210 den Drehzahlsollwert n_soll ausreichend exakt einregelt. Vorteilhafterweise kann auch die gemessene Rotorposition Phi oder eine mit einer geberfreien Winkelnachbildung ermittelte Rotorposition Phi zur Ermittlung der Dämpfungsspannung U_D verwendet werden.

Bevorzugt wird für eine optimierte Regelung ein Strom durch die elektrische Maschine I_ist zurückgeführt und von dem Soll-Strom I_soll, der bevorzugt mit dem Solldrehmoment T_soll korelliert und aus diesem ermittelt wird, als Rückführgröße abgezogen.

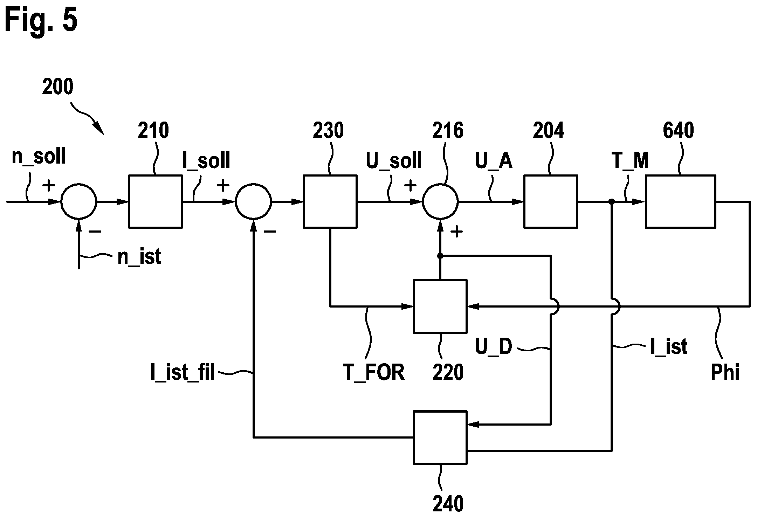

Figur 5 zeigt ausgehend von Figur 4 eine dritte alternative schematische Drehzahlregelstruktur 200 einer elektrischen Maschine wobei ergänzend zu Figur 4 die feldorientierte Regelung 230 von der Dämpfungseinheit 220 entkoppelt wird über eine Entkoppelstruktur 240. Dabei wird das Strommessignal I_ist für die feldorientierte Regelung 230 entsprechend gefiltert zu dem gefilterten Strommessignal I_ist_fil. Dazu wird mittels einem Modell die Auswirkung der Dämpfungsspannung U_D auf die Maschinenströme ermittelt und dies von den Strommesswerten I_ist der feldorientierten Regelung 230 abgezogen.

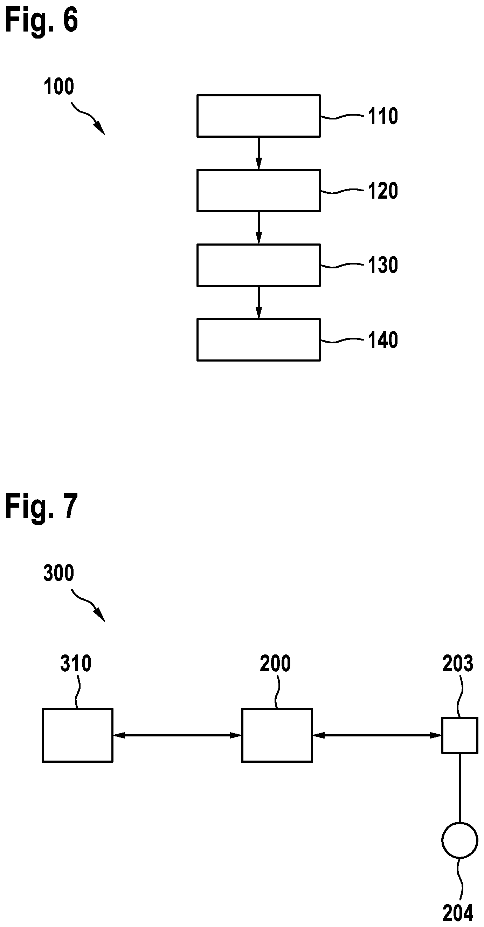

Figur 6 zeigt ein schematisch dargestelltes Ablaufdiagramm für ein Verfahren 100 zur Drehzahlregelung einer elektrischen Maschine 204. Mit Schritt 110 wird ein Solldrehmoment T_soll in Abhängigkeit einer Differenz aus einer Solldrehzahl n_soll und einer Istdrehzahl n_ist der elektrischen Maschine 204 mittels des Drehzahlreglers 210 ermittelt. Mit Schritt 120 wird ein Dämpfungsdrehmoment T_D in Abhängigkeit des Winkels Phi und eines ersten Drehmomentwertes T_1 ermittelt. Mit Schritt 130 werden eine das Solldrehmoment T_soll charakterisierende Größe und eine das Dämpfungsdrehmoment T_D charakterisierende Größe zu einer das Ansteuerdrehmoment T_A charakterisierenden Größe überlagert. Mit Schritt 140 wird die elektrische Maschine 204 mit der das Ansteuerdrehmoment T_A charakterisierenden Größe angesteuert.

Die Figur 7 zeigt eine schematische dargestellte Vorrichtung 300 zur Drehzahlregelung einer elektrischen Maschine 204. Die elektrische Maschine 204 wird mittels eines Inverters 203 angesteuert. Die Vorrichtung 300 umfasst eine Drehzahlregelstruktur 200 und eine Recheneinheit 310 zur Steuerung und Umsetzung der Struktur Drehzahlregelstruktur 200. Die Vorrichtung 300 ist dazu eingerichtet die oben beschriebenen Verfahrensschritte auszuführen und somit die elektrischen Maschine 204 zu betreiben und zu regeln.

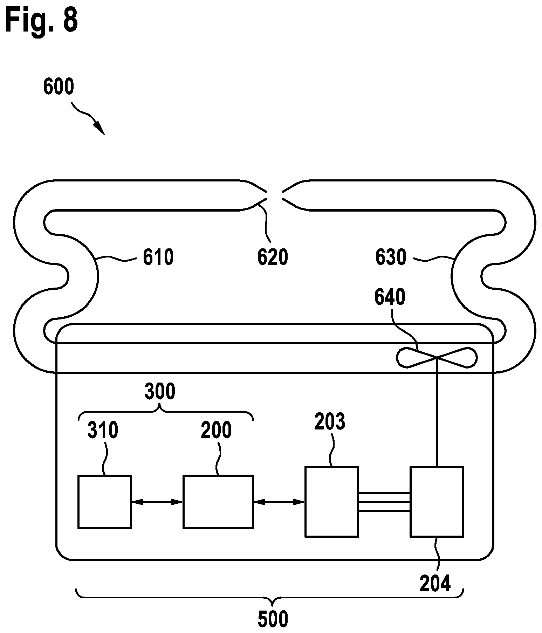

Die Figur 8 zeigt eine schematisch dargestellte Wärmepumpe 600 mit einem elektrischen Antriebssystem 500. Das Antriebssystem 500 umfasst die elektrische Maschine 204, welche mittels eines Inverters 203 angesteuert wird, und eine Vorrichtung 300 zur Regelung der elektrischen Maschine 204, wie zu Figur 7 beschrieben. Die elektrische Maschine 204 treibt einen Kompressor 640 der Wärmepumpe 600 an. Bevorzugt umfasst die Wärmepumpe 600 einen Kondensator 610, eine Drossel 620 und/ oder einen Verdampfer 630.

## Patentansprüche

1. Verfahren (100) zur Drehzahlregelung einer elektrischen Maschine (204) für den Antrieb eines Kompressors (640) einer Wärmepumpe (600), mit einem Drehzahlregler (210) und einer Dämpfungseinheit (220),
mit den Schritten:
Ermitteln (110) eines Solldrehmomentes (T_soll) in Abhängigkeit einer Differenz aus einer Solldrehzahl (n_soll) und einer Istdrehzahl (n_ist) der elektrischen Maschine (204) mittels des Drehzahlreglers (210),
Ermitteln (120) eines Dämpfungsdrehmomentes (T_D) in Abhängigkeit eines Winkels (Phi) und einem ersten Drehmomentwert (T_1),
Überlagern (130) einer das Solldrehmoment (T_soll) charakterisierenden Größe mit einer das Dämpfungsdrehmoment (T_D) charakterisierenden Größe zu einer das Ansteuerdrehmoment (T_A) charakterisierenden Größe,
Ansteuern (140) der elektrischen Maschine (204) mit der das Ansteuerdrehmoment (T_A) charakterisierenden Größe.
**dadurch gekennzeichnet, dass**
die Amplitude des Dämpfungsdrehmomentes (T_D) in Abhängigkeit einer das Solldrehmoment (T_soll) charakterisierenden Größe vorgegeben wird
und der erste Drehmomentwert (T_1) dem ermittelten Solldrehmoment (T_soll) oder dem Drehmomentwert (T_FOR) einer feldorientierten Regelung (230) entspricht.

2. Verfahren (100) nach Anspruch 1, wobei das Dämpfungsdrehmoment (T_D) in Abhängigkeit einer harmonischen Funktion mit einer vorbestimmten Frequenz einer vorgebbaren Ordnung der Drehzahl der elektrischen Maschine (204) oder der Drehzahl der Kompressorantriebwelle des mit der elektrischen Maschine anzutreibenden Kompressors ermittelt wird.

3. Verfahren (100) nach einem der vorhergehenden Ansprüche, wobei die harmonische Funktion als eine Sinus- oder Cosinus-Funktion, eine Rechteckfunktion vorgegeben wird oder als eine beliebige Funktion oder mittels eines Kennfeldes vorgegeben wird, wobei die beliebige Funktion oder die Parameter des Kennfeldes in Abhängigkeit ungleichmäßiger Antriebsystemwiderstände vorgegeben werden.

4. Verfahren (100) nach einem der vorhergehenden Ansprüche,
wobei die das Solldrehmoment charakterisierende Größe das ermittelte Solldrehmoment (T_soll) ist und die das Dämpfungsdrehmoment charakterisierende Größe das ermittelte Dämpfungsdrehmoment (T_D) ist und die Überlagerung des Solldrehmomentes und des Dämpfungdrehmomentes zu dem Ansteuerdrehmoment (T_A) die das Ansteuerdrehmoment charakterisierende Größe ist.

5. Verfahren (100) nach einem der vorhergehenden Ansprüche,
wobei die das Solldrehmoment charakterisierende Größe mittels einer feldorientierten Regelung (230) und/ oder eines Maschinenmodells als eine Sollspannung (U_soll) ermittelt wird und die das Dämpfungsdrehmoment charakterisierende Größe mittels einer feldorientierten Regelung und/ oder eines Maschinenmodells als eine Dämpfungsspannung (U_D) ermittelt wird und die Sollspannung (U_soll) und die Dämpfungsspannung (U_D) zu einer Ansteuerspannung (U_A) überlagert werden, welche als die das Ansteuerdrehmoment charakterisierenden Größe ermittelt wird.

6. Computerprogramm, umfassend Befehle, die bewirken, dass die Vorrichtung des Anspruchs 8 das Verfahren/die Schritte des Verfahrens (100) nach Anspruch 1 bis 5 ausführt.

7. Computerlesbares Speichermedium, umfassend Befehle, die bewirken, dass die Vorrichtung nach Anspruch 8 das Verfahren/die Schritte des Verfahrens (100) nach Anspruch 1 bis 5 ausführt.

8. Vorrichtung (300) zur Drehzahlregelung einer elektrischen Maschine (204) für den Antrieb eines Kompressors (640), mit einem Drehzahlregler (210) und einer Dämpfungseinheit (220),
wobei die Vorrichtung dazu eingerichtet ist, die Schritte des Verfahrens (100) nach einem der Ansprüche 1-5 auszuführen.

9. Elektrisches Antriebssystem (500) mit einer elektrischen Maschine (204) und einer Vorrichtung (300) nach Anspruch 8.

10. Wärmepumpe (600) mit einem elektrischen Antriebssystem (500) nach Anspruch 9,
wobei die Wärmepumpe (600) einen Kompressor (640) und insbesondere einen Kondensator (610), eine Drossel (620) und/ oder einen Verdampfer (630) umfasst.

## Claims

1. Method (100) for controlling the speed of an electric machine (204) for driving a compressor (640) of a heat pump (600), having a speed controller (210) and a damping unit (220),
said method having the steps of:
ascertaining (110) a target torque (T_soll) as a function of a difference between a target speed (n_soll) and an actual speed (n_ist) of the electric machine (204) using the speed controller (210),
ascertaining (120) a damping torque (T_D) as a function of an angle (Phi) and a first torque value (T_1),
superposing (130) a variable characterizing the target torque (T_soll) with a variable characterizing the damping torque (T_D) to form a variable characterizing the actuation torque (T_A),
actuating (140) the electric machine (204) using the variable characterizing the actuation torque (T_A),
**characterized in that**
the amplitude of the damping torque (T_D) is specified as a function of a variable characterizing the target torque (T_soll)
and the first torque value (T_1) corresponds to the ascertained target torque (T_soll) or the torque value (T_FOR) of a field-oriented control system (230).

2. Method (100) according to Claim 1, wherein the damping torque (T_D) is ascertained as a function of a harmonic function with a predetermined frequency of a predeterminable order of the speed of the electric machine (204) or the speed of the compressor drive shaft of the compressor to be driven using the electric machine.

3. Method (100) according to either of the preceding claims, wherein the harmonic function is specified as a sine or cosine function, a square-wave function or is specified as an arbitrary function or by means of a characteristic map, wherein the arbitrary function or the parameters of the characteristic map are specified as a function of irregular drive system resistances.

4. Method (100) according to one of the preceding claims,
wherein the variable characterizing the target torque is the ascertained target torque (T_soll) and the variable characterizing the damping torque is the ascertained damping torque (T_D), and the superposition of the target torque and the damping torque to form the actuation torque (T_A) is the variable characterizing the actuation torque.

5. Method (100) according to one of the preceding claims,
wherein the variable characterizing the target torque is ascertained as a target voltage (U_soll) by means of a field-oriented control system (230) and/or a machine model and the variable characterizing the damping torque is ascertained as a damping voltage (U_D) by means of a field-oriented control system and/or a machine model and the target voltage (U_soll) and the damping voltage (U_D) are superposed to form an actuation voltage (U_A), which is ascertained as the variable characterizing the actuation torque.

6. Computer program comprising instructions that cause the device in Claim 8 to carry out the method/the steps of the method (100) according to Claims 1 to 5.

7. Computer-readable storage medium comprising instructions that cause the device according to Claim 8 to carry out the method/the steps of the method (100) according to Claims 1 to 5.

8. Device (300) for controlling the speed of an electric machine (204) for driving a compressor (640), having a speed controller (210) and a damping unit (220),
wherein the device is configured to carry out the steps of the method (100) according to one of Claims 1-5.

9. Electric drive system (500) having an electric machine (204) and a device (300) according to Claim 8.

10. Heat pump (600) having an electric drive system (500) according to Claim 9, wherein the heat pump (600) comprises a compressor (640) and in particular a
condenser (610), a throttle (620) and/or an evaporator (630).

## Revendications

1. Procédé (100) pour commander la vitesse de rotation d'une machine électrique (204) pour l'entraînement d'un compresseur (640) d'une pompe à chaleur (600), comprenant un dispositif de commande de vitesse de rotation (210) et une unité d'amortissement (220),
comprenant les étapes consistant à :
déterminer (110) un couple cible (T_soll) en fonction de la différence entre une vitesse de rotation cible (n_soll) et une vitesse de rotation réelle (n_ist) de la machine électrique (204) au moyen du dispositif de commande de vitesse de rotation (210),
déterminer (120) un couple d'amortissement (T_D) en fonction d'un angle (Phi) et d'une première valeur de couple (T_1),
superposer (130) une grandeur caractérisant le couple cible (T_soll) à une grandeur caractérisant le couple d'amortissement (T_D) pour obtenir une grandeur caractérisant le couple d'actionnement (T_A),
actionner (140) la machine électrique (204) à l'aide de la grandeur caractérisant le couple d'actionnement (T_A),
**caractérisé en ce que**
l'amplitude du couple d'amortissement (T_D) est prédéfinie en fonction d'une grandeur caractérisant le couple cible (T_soll)
et la première valeur de couple (T_1) correspond au couple cible (T_soll) déterminé ou à la valeur de couple (T_FOR) d'une commande (230) à orientation de champ.

2. Procédé (100) selon la revendication 1, dans lequel le couple d'amortissement (T_D) est déterminé en fonction d'une fonction harmonique ayant une fréquence prédéterminée d'un ordre prédéfinissable de la vitesse de rotation de la machine électrique (204) ou de la vitesse de rotation de l'arbre d'entraînement du compresseur devant être entraîné par la machine électrique.

3. Procédé (100) selon l'une quelconque des revendications précédentes, dans lequel la fonction harmonique est prédéfinie sous la forme d'une fonction sinus ou cosinus, d'une fonction carré ou d'une fonction quelconque ou au moyen d'un champ caractéristique, la fonction quelconque ou les paramètres du champ caractéristique étant prédéfinis en fonction de résistances inégales du système d'entraînement.

4. Procédé (100) selon l'une quelconque des revendications précédentes,
dans lequel la grandeur caractérisant le couple cible est le couple cible (T_soll) déterminé et la grandeur caractérisant le couple d'amortissement est le couple d'amortissement (T_D) déterminé et la superposition du couple cible et du couple d'amortissement pour obtenir le couple d'actionnement (T_A) est la grandeur caractérisant le couple d'actionnement .

5. Procédé (100) selon l'une quelconque des revendications précédentes,
dans lequel la grandeur caractérisant le couple cible est déterminée au moyen d'une commande à orientation de champ (230) et/ou d'un modèle de machine sous la forme d'une tension cible (U_soll) et la grandeur caractérisant le couple d'amortissement est déterminée au moyen d'une commande à orientation de champ et/ou d'un modèle de machine sous la forme d'une tension d'amortissement (U_D), et la tension cible (U_soll) et la tension d'amortissement (U_D) sont superposées pour obtenir une tension d'actionnement (U_A), qui est déterminée en tant que grandeur caractérisant le couple d'actionnement.

6. Programme informatique, comprenant des instructions qui ont pour effet que le dispositif selon la revendication 8 met en œuvre le procédé/les étapes du procédé (100) selon les revendications 1 à 5.

7. Support de stockage lisible par ordinateur comprenant des instructions qui ont pour effet que le dispositif selon la revendication 8 met en œuvre le procédé/les étapes du procédé (100) selon les revendications 1 à 5.

8. Procédé (300) pour commander la vitesse de rotation d'une machine électrique (204) pour l'entraînement d'un compresseur (640), comprenant un dispositif de commande de vitesse de rotation (210) et une unité d'amortissement (220),
le dispositif étant conçu pour mettre en œuvre les étapes du procédé (100) selon l'une quelconque des revendications 1-5.

9. Système d'entraînement électrique (500) comprenant une machine électrique (204) et un dispositif (300) selon la revendication 8.

10. Pompe à chaleur (600) comprenant un système d'entraînement électrique (500) selon la revendication 9,
la pompe à chaleur (600) comprenant un compresseur (640) et en particulier un condenseur (610), un étranglement (620) et/ou un évaporateur (630).
